(19) **Europäisches Patentamt / European Patent Office / Office européen des brevets**

(11) **EP 4 782 988 A1**

(12) **EUROPEAN PATENT APPLICATION**

(43) Date of publication:
29.07.2026 Bulletin 2026/31

(21) Application number: 25202395.7

(22) Date of filing: 16.09.2025

(51) International Patent Classification (IPC):
**G06F 7/544** (2006.01) **G06F 9/345** (2018.01)
**G06F 12/02** (2006.01)

(52) Cooperative Patent Classification (CPC):
**G06F 7/544; G06F 9/3001; G06F 9/3455; G06F 12/0207**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 28.01.2025 US 202563750542 P
16.05.2025 US 202519211134
22.07.2025 KR 20250099324

(71) Applicant: **Samsung Electronics Co., Ltd.**
**Suwon-si, Gyeonggi-do 16677 (KR)**

(72) Inventors:
• **GHOSH, Mrinmoy**
**San Jose, CA, 95134 (US)**
• **KIM, Hyojong**
**San Jose, CA, 95134 (US)**
• **WOO, Dong Hyuk**
**San Jose, CA, 95134 (US)**

(74) Representative: **Kuhnen & Wacker**
**Patent- und Rechtsanwaltsbüro PartG mbB**
**Prinz-Ludwig-Straße 40 A**
**85354 Freising (DE)**

(54) **SYSTEM INCLUDING ADDRESS GENERATOR AND METHOD THEREOF**

(57) A system and a method for address generation are provided. In some embodiments, the system includes: an address generator including: a first accumulator (330) including an accumulator register (310) for storing a first accumulator value; and a first stride register (305) configured to store a first stride value. The address generator may be configured to generate a first address, the generating of the first address including adding the first stride value to the first accumulator value.

FIG. 3A

EP 4 782 988 A1

**Description**

**FIELD**

One or more aspects of embodiments according to the present disclosure relate to tensor operations, and more particularly to systems including an address generator for performing tensor operations and methods thereof.

**BACKGROUND**

Under various circumstances, a computing system may calculate products (e.g., dot products, or element-by-element products) of tensors, such as vectors or matrices. The performing of such calculations may include reading the elements of the operands from memory, performing operations on the elements (e.g., multiplications and accumulations), and saving the results to memory.

It is with respect to this general technical environment that aspects of the present disclosure are related.

The above information disclosed in this Background section is only for enhancement of understanding of the background and therefore the information discussed in this Background section does not necessarily constitute prior art.

**SUMMARY**

It is an object of the invention to provide a more efficient system and method for address generation for tensor computations to thereby improve the efficiency of a computer and thereby improve the functioning of the computer.

According to an embodiment of the present disclosure, there is provided a system, including: an address generator including: a first accumulator including a first accumulator register for storing a first accumulator value; and a first stride register configured to store a first stride value, the address generator being configured to generate a first address, the generating of the first address including adding the first stride value to the first accumulator value.

In some embodiments, the address generator further includes a first counter configured: to receive a trigger signal, and, upon expiration of a count, to feed a reset signal to the first accumulator.

In some embodiments: the address generator further includes: a second accumulator including a second accumulator register for storing a second accumulator value; and a second stride register configured to store a second stride value, and the generating of the first address further includes: adding the second stride value to the second accumulator value, and adding the second accumulator value to the first accumulator value.

In some embodiments, the address generator further includes an adder configured to add the second accumulator value to the first accumulator value.

In some embodiments, the address generator includes a plurality of cascaded counters including the first counter and a second counter, the second counter being configured: to receive a trigger signal from a reset signal output of the first counter, and, upon expiration of a count, to feed a reset signal to the second accumulator.

In some embodiments: the address generator further includes: a third accumulator including a third accumulator register for storing a third accumulator value; and a third stride register configured to store a third stride value, and the generating of the first address further includes: adding the third stride value to the third accumulator value, and adding the third accumulator value to the first accumulator value.

In some embodiments, the address generator further includes an adder configured to add: the first accumulator value, the second accumulator value, and the third accumulator value.

In some embodiments, the third stride register is the same register as the first stride register.

In some embodiments: the address generator further includes: a fourth accumulator including a fourth accumulator register for storing a fourth accumulator value; and a fourth stride register configured to store a fourth stride value, and the generating of the first address further includes: adding the fourth stride value to the fourth accumulator value, and adding the fourth accumulator value to the first accumulator value.

In some embodiments, the address generator further includes an adder configured to add: the first accumulator value, the second accumulator value, the third accumulator value, and the fourth accumulator value.

In some embodiments, the fourth stride register is the same register as the second stride register.

In some embodiments, the address generator further includes: a fifth accumulator including a fifth accumulator register for storing a fifth accumulator value; and a fifth stride register configured to store a fifth stride value, a first counter configured: to receive a trigger signal, and, upon expiration of a count, to feed a reset signal to the first accumulator and to the fifth accumulator.

According to an embodiment of the present disclosure, there is provided a method, including: generating a first address, by an address generator, the address generator including: a first accumulator including a first accumulator register for storing a first accumulator value; and a first stride register configured to store a first stride value, the generating of the first address including adding the first stride value to the first accumulator value.

In some embodiments, the address generator further includes a first counter configured: to receive a trigger signal, and, upon expiration of a count, to feed a reset signal to the first accumulator.

In some embodiments: the address generator further includes: a second accumulator including a second accumulator register for storing a second accumulator value; and a second stride register configured to store a second stride value, and the generating of the first address further includes: adding the second stride value to the second accumulator value, and adding the second accumulator value to the first accumulator value.

In some embodiments, the address generator further includes an adder configured to add the second accumulator value to the first accumulator value.

In some embodiments, the address generator further includes a second counter configured: to receive a trigger signal from a reset signal output of the first counter, and, upon expiration of a count, to feed a reset signal to the second accumulator.

In some embodiments: the address generator further includes: a third accumulator including a third accumulator register for storing a third accumulator value; and a third stride register configured to store a third stride value, and the generating of the first address further includes: adding the third stride value to the third accumulator value, and adding the third accumulator value to the first accumulator value.

In some embodiments, the address generator further includes an adder configured to add: the first accumulator value, the second accumulator value, and the third accumulator value.

According to an embodiment of the present disclosure, there is provided a system, including: an accelerator, including: an address generator, a multiply-and-accumulate circuit, and a data memory, the address generator including a first accumulator including a first accumulator register for storing a first accumulator value, and the address generator being configured to generate a first address, the generating of the first address including adding a first stride value to the first accumulator value.

## BRIEF DESCRIPTION OF THE DRAWINGS

These and other features and advantages of the present disclosure will be appreciated and understood with reference to the specification, claims, and appended drawings wherein:

FIG. 1A is a block diagram of a computing system, according to an embodiment of the present disclosure;
FIG. 1B is a block diagram of a host and an accelerator, according to an embodiment of the present disclosure;
FIG. 2 is an illustration of a two-dimensional convolution operation, according to an embodiment of the present disclosure;
FIG. 3A is a block diagram of an address generation unit, according to an embodiment of the present disclosure;
FIG. 3B depicts instructions of an instruction set, according to an embodiment of the present disclosure; and
FIG. 4 is a flow chart of a method of generating addresses, according to an embodiment of the present disclosure.

## DETAILED DESCRIPTION

The detailed description set forth below in connection with the appended drawings is intended as a description of exemplary embodiments of an address generation unit provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

The operation of artificial intelligence (AI) accelerators may involve the processing of massively parallel data in the form of multi-dimensional tensors. Some examples of operations performed on these multi-dimensional tensors may include matrix multiplication, pooling and non-linear operations such as sigmoid and hyperbolic tangent (tanh). Such an accelerator may work on (e.g., process) only data present in its local memory. As such, the input tensors for such operations may be fetched from a remote memory, and, after the input tensors have been processed, the output tensors may be written back to the remote memory.

The address generation unit (AGU) in an artificial intelligence accelerator may be a circuit for generating the addresses of the operands (e.g., elements of a tensor) that are used by the compute units in the accelerator, and also for generating the addresses of the elements of the output. Address generation, if performed using multiplications, may be relatively costly, in terms of power and delay.

As such, some embodiments provide an address generation unit using cascaded counters that uses repeated addition (in each of one or more accumulators) and avoids the use of multiplications. As discussed in further detail below, such an address generation unit may be used, for example, to generate addresses for a two-dimensional convolution. In some embodiments, the address generation unit, or an analogous address generation unit, may be used for a broad range of multi-dimensional tensor traversal calculations, and the design is not limited to the two-dimensional convolution use-case illustrated in this disclosure.

For example, various tensor operations may be performed by fetching a sequence of elements from each of two or more tensor operands, and storing the result in a result (or "output") tensor. Each of the tensors may be stored in a contiguous set of locations in the data memory. Each fetch operation, for example, may involve retrieving an element of an operand tensor at an address defined by the sum of a base address and an address offset, where the address offset is equal to the sum of (i) a row index times a row stride, and (ii) a column index times a column stride. Multiplying indices by strides to calculate the address may be burdensome, however. As such, in some embodiments, the addresses of a sequence of addresses are instead calculated by repeatedly adding a row stride to the last address offset used when the row index increases, and adding a column stride to the last address offset used when the column index increases. The same approach may be used for both operands, and also for generating addresses in which to store elements of the result tensor.

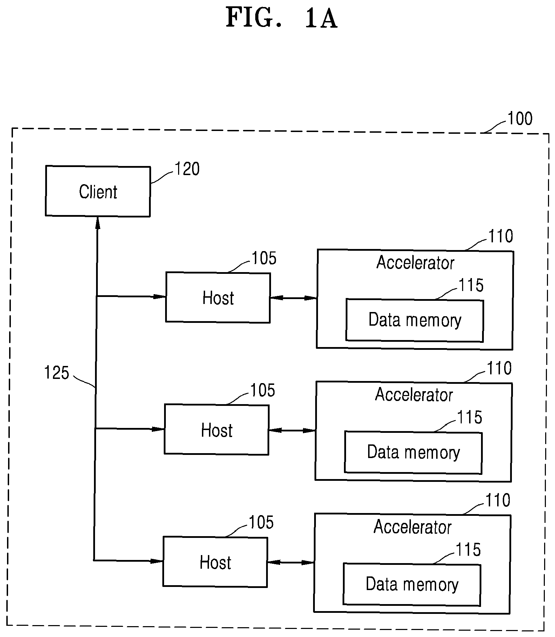

FIG. 1A is a block diagram of a computing system 100, according to an embodiment of the present disclosure. The computing system 100 may include one or more hosts 105. Each host 105 controls, and uses, a corresponding accelerator 110 (e.g., a tensor calculation accelerator) to perform calculations such as convolution operations. During this process, the host 105 may write (e.g., using direct memory access (DMA)) operands to a data memory 115 of the accelerator 110, the host 105 may send commands to the accelerator 110 to perform certain operations (e.g., a two-dimensional convolution operation) on the operands, and the host 105 may, after the operations are complete, read the results (e.g., the output) from the data memory 115 of the accelerator 110.

A client 120, which may be connected to the host(s) 105 through a network 125 (e.g., via a wired or wireless communication protocol), may send requests (e.g., for higher-level artificial intelligence operations) to the host 105, and receive results from the host 105. As illustrated in FIG. 1A, the client 120 may be connected to a plurality of hosts 105 providing similar services. Accordingly, the client 120 may send a request to perform image classification, the request including an image, to a host 105, and the host 105 may perform the image classification, e.g., using the accelerator 110 to perform tensor operations (e.g., two-dimensional convolutions) to perform the image classification. The accelerator 110 may use an address generation unit (discussed in further detail below) to perform the tensor operation efficiently.

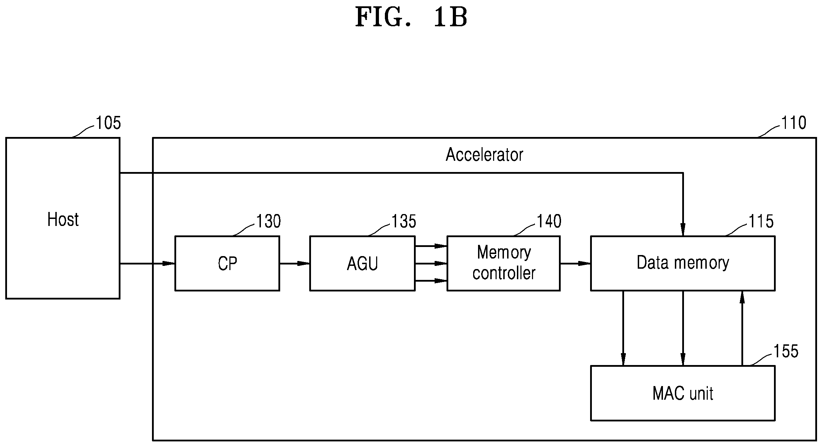

FIG. 1B is a block diagram of a host 105 and an accelerator 110, according to an embodiment of the present disclosure. The accelerator 110 may include a control processor (CP) 130, an address generation unit (AGU) (or address generation circuit, or address generator) 135, a memory controller 140, the data memory 115, a multiply-and-accumulate (MAC) unit (or multiply-and-accumulate circuit) 155. In operation, the address generation unit 135 may be configured and instructed by the control processor 130 to generate a sequence of operand and result addresses, and the memory controller 140 may receive the addresses and cause the data memory 115 to send (e.g., by setting data bus lines to suitable values) corresponding operands (stored at addresses generated by the address generation unit 135) to the multiply-and-accumulate unit 155 (which may load the operands (e.g., from the data bus), and to store the results generated by the multiply-and-accumulate unit 155 in the data memory 115, at addresses also generated by the address generation unit 135.

The accelerator 110 may be configured, for example, to perform convolution operations. Convolution is a process in which an input tensor, which may be based on a large image, is operated upon by a filter which may be smaller than the image to produce a tensor that represents some property of the input tensor. For example, the property to be calculated as an output may be vertical edges in the input image; in such a case the filter (or "kernel") may be selected to generate large values at positions in the output tensor that correspond to the locations of vertical edges in the input image. Two-dimensional convolution is a subset of convolution in which the input tensor, the filter and the output tensor are all two-dimensional.

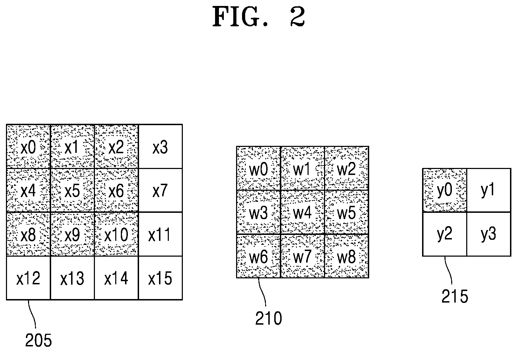

FIG. 2 is an illustration of a two-dimensional convolution operation, according to an embodiment of the present disclosure. FIG. 2 illustrates a convolution operation, using a small (4 x 4) input tensor 205 and a small (3 x 3) kernel 210 (and resulting in a small (2 x 2) output tensor 215) for ease of illustration and comprehension. In FIG. 2 a first output element, y0, is given by:

$$y0 = (x0*w0 + x1*w1 + x2*w2 + x4*w3 + x5*w4 + x6*w5 + x8*w6 + x9*w7 + x10*w8).$$

Similarly, a second output element, y1 is computed by calculating the sum of the element-by-element products of the kernel 210 (w0 - w8) and the following subarray of the input tensor 205: (x1, x2, x3, x5, x6, x7, x9, x10, x11).

Code such as that of Listing 1 below may be used for computing a two-dimensional convolution. This code, if executed, would perform the iterations over elements of the three two-dimensional tensors (e.g., matrices) involved: the input tensor, the kernel tensor, and the output tensor. For each position of the kernel tensor over a sub-array of the input matrix (the sub-array being the same size as the tensor), two nested loops (the innermost two loops) may be used to iterate over the indices (a row index and a column index) of the elements of the kernel and of the sub-array; for each value pair of the two indices, the two corresponding elements (of the tensor and of the sub-array) may be multiplied together and the product may be added to a running sum, which, when complete, is the value of the corresponding element of the output matrix. The outer two nested loops correspond to repositioning the kernel to all possible positions on the input matrix.

## Listing 1

```
for output_0 in range(output_size):
    for output_1 in range(output_size):
        for kernel_0 in range(kernel_size):
            for kernel_1 in range(kernel_size):
                [output_address, kernel_address,
input_address] = Calculate_addresses(output_0, output_1,
kernel_0, kernel_1)
                output_mat[output_address]        +=        (
input_mat[input_address] * kernel_mat[kernel_address] )
```

The code of Listing 1 accesses three tensors: the output tensor (output_mat), the input tensor (input_mat) and the kernel tensor (kernel_mat). The addresses in memory of the elements of these tensors may be calculated using the function Calculate_addresses, which may contain the code of Listing 2 below, assuming a row major layout (e.g., the elements of the tensor are stored one row at a time) and square tensors.

Listing 2

```
        output_address=(output_mat_base_address +
        output_0*output_size*sizeof_elem + output_1*sizeof_elem)

        kernel_address=(kernel_mat_base_address +
        kernel_0*kernel_size*sizeof_elem + kernel_1*sizeof_elem)

            input_address=(input_mat_base_address +
            (output_0+kernel_0)*input_size*sizeof_elem+
            (output_1+kernel_1)*sizeof_elem)
```

where the suffix _base_address refers to the starting address of the range of memory locations at which the tensor is stored, and sizeof_elem is the size of each element of the tensor.
All of the address calculations may be performed in the innermost loop of the code of Listing 1 (e.g., the code of Listing 2 may be incorporated into the inner loop of the code of Listing 1). The address calculations of Listing 2 may be performed using nine multiplications. As such, even the relatively small two-dimensional convolution (of a 4x4 input tensor with a 2x2 kernel) illustrated in FIG. 2 may use 324 multiplications for address calculations.
Each of the products in Listing 2 is a product of an index (a row index or a column index of a tensor) and a stride, the stride being the amount by which the product increases when the index increases by 1. For example, in the product output_0*output_size*sizeof_elem, output_0 is the index, and output_size*sizeof_elem is the stride. In the multiplications of Listing 2, only the index component (e.g., output_0 and output_1, when calculating output_address) changes as the loops of the code of Listing 1 are executed. The stride components (e.g., output_size*sizeof_elem and sizeof_elem when calculating output_address) remain constant during the execution of the code of Listing 1.
The fact that the stride components remain constant may be used to improve the efficiency of the address calculations. For example, the stride may be computed once, outside of the set of nested loops, and the result of this calculation may be reused within the loops. Because the index components of the address calculations change monotonically inside the loop, each multiplication by an index in the code of Listing 2 may be replaced by adding the stride to the last-calculated product of index and stride.

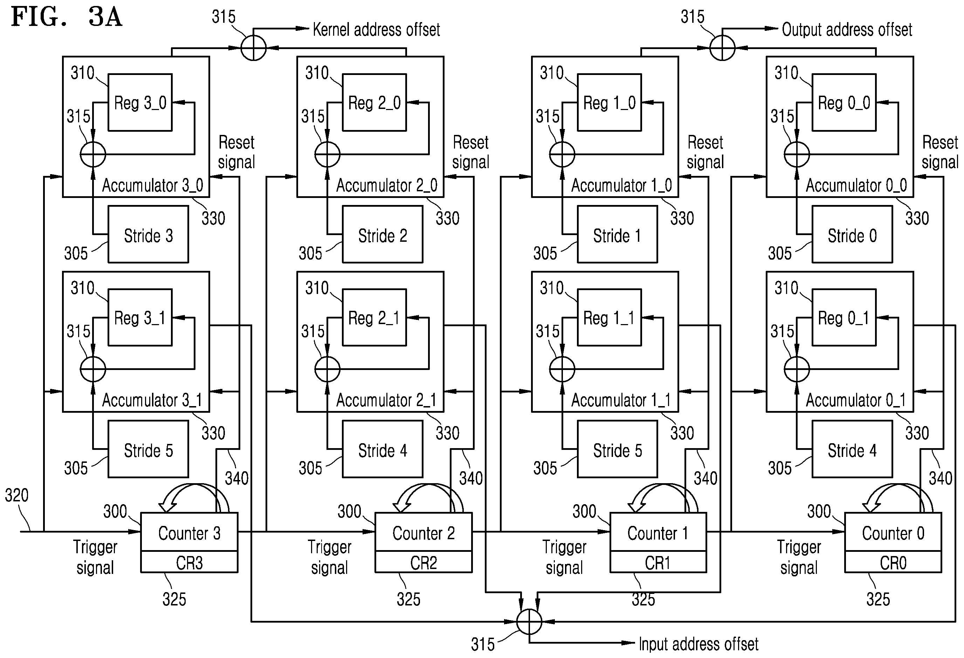

FIG. 3A is a block diagram of an address generation unit, according to an embodiment of the present disclosure. FIG. 3A shows an address generation unit which uses this principle to generate a kernel address offset, an output address offset, and an input address offset, each of which may be added to a respective base address, as shown in Listing 2, to obtain an address in memory for the kernel, output, and input tensors respectively.

The address generation unit of FIG. 3A includes four counters 300, eight accumulators 330, and eight stride registers 305 (some of which may be the same as others, as discussed in further detail below). Each accumulator 330 may include, as shown, an accumulator register 310, and an adder 315, with the adder 315 having two inputs, one of which receives the current value in the accumulator register 310. The other input of each adder 315 may receive the value of the stride register 305 associated with the accumulator 330.

The accumulator 330 may be controlled by (i) a trigger signal, an edge (e.g., a rising edge or a falling edge) of which may cause the accumulator 330 to replace the value in the accumulator register 310 with the output of the adder 315, and (ii) a reset signal, which may cause the accumulator register 310 to be reset to zero. The accumulators 330 are numbered, in FIG. 3A, with the number of each accumulator (e.g., 0_0, or 0_1) being shown, in FIG. 3A, on the accumulator register 310 of the accumulator 330.

Each accumulator 330 may have three inputs: a stride input (a multi-bit input that receives the value of the stride register 305 connected to the accumulator 330), a trigger input (which, when asserted, causes an accumulation operation to occur (e.g., causes the value of the accumulator register 310 to be increased by the value at the stride input)), and a reset input (which, when asserted, causes the accumulator register 310 to be reset to zero). Each accumulator 330 may also have one output, which is the value of the accumulator register 310. Each counter 300 may have a trigger input, a reset output and a trigger output. The circuit of FIG. 3A may be a synchronous logic circuit; as such, a system clock signal (not shown, for clarity) may be distributed to all of the accumulators 330 and to all of the counters 300.

The system of FIG. 3A includes four cascaded counters 300 (or "a cascade of counters'), the counters 300 being cascaded (or "connected in cascade") in the sense that the trigger input of each of the counters 300 except for the first counter 300 in the cascade is connected to the trigger output of the preceding counter 300 in the cascade. In FIG. 3A the first counter 300 in the cascade is Counter 3 and the last counter 300 in the cascade is Counter 0. In some embodiments, the reset output and the trigger output are the same output, and, for example, the reset signal of a counter may be connected to the trigger input of the next counter 300 in the cascade.

Each of the counters 300 is associated with a respective pair of accumulators 330, the trigger input of the counter 300 being connected to the trigger inputs of the accumulators 330 with which it is associated, and the reset output of the counter 300 being connected to the reset inputs of the accumulators 330 with which it is associated. Counter 3 is associated with accumulators 3_0 and 3_1, Counter 2 is associated with accumulators 2_0 and 2_1, Counter 1 is associated with accumulators 1_0 and 1_1, and Counter 0 is associated with accumulators 0_0 and 0_1.

The stride input of each accumulator 330 is connected to the output of a respective stride register 305, each identified by a number, e.g., Stride 0, Stride 1, etc. The stride registers 305 are connected to accumulators 330 as shown in the table below:

| Accumulator | Stride Register |
|---|---|
| Accumulator 3_0 | Stride 3 |
| Accumulator 3_1 | Stride 5 |
| Accumulator 2_0 | Stride 2 |
| Accumulator 2_1 | Stride 4 |
| Accumulator 1_0 | Stride 1 |
| Accumulator 1_1 | Stride 5 |
| Accumulator 0_0 | Stride 0 |
| Accumulator 0_1 | Stride 4 |

Stride registers with the same number may be a single shared register or two registers programmed with the same value.

The outputs of Accumulator 3_0 and Accumulator 2_0 are connected to respective inputs of an adder which sums their values and generates a kernel address offset. The outputs of Accumulator 1_0 and Accumulator 0_0 are connected to respective inputs of an adder which sums their values and generates an output address offset. The outputs of Accumulator 3_1, Accumulator 2_1, Accumulator 1_1, and Accumulator 0_1 are connected to respective inputs of an adder (e.g., an adder tree) which sums their values and generates an input address offset.

In operation, the address generation unit may receive a sequence of edges (e.g., rising edges or falling edges) at a trigger signal input 320, and, each time it receives an edge, the address generation unit may generate a new set of values for the kernel address offset, the output address offset, and the input address offset. The addresses of the current element of the output tensor, the current element of the input tensor and the current element of the kernel tensor may then be calculated by adding the respective base addresses to the corresponding offsets. These addresses may then be used to (i) retrieve the corresponding elements of the input tensor and the kernel tensor, and multiply them together, and (ii) add the result to the corresponding element of the output tensor.

Each counter 300 may have connected to it a counter register 325 (CR0, CR1, CR2 and CR3 in FIG. 3A). When the counter 300 reaches its target count (e.g., (i) zero, if the counter 300 counts down, or (ii) the value stored in the counter register 325, if the counter 300 counts up), the counter 300 may generate a pulse (or, equivalently, an edge (e.g., a rising edge or a falling edge)) at its reset signal output 340, and a pulse (or an edge) at its trigger signal output, and it may reset (as shown by the curved arrow above each counter 300 in FIG. 3A) to its starting value (e.g., the value stored in the counter register 325, if the counter 300 counts down, or zero, if the counter 300 counts up).

The four counters 300 may be cascaded, e.g., the trigger signal output of each of the four counters 300 is connected to the trigger signal input of the next lower-numbered counter 300 (e.g., the counter 300 to its right, in FIG. 3A). Each counter 300 corresponds to one of the nested loops in Listing 1. The leftmost counter 300, Counter 3, corresponds to the innermost loop in Listing 1. Referring to FIG. 3A and Listing 1, kernel_1 corresponds to Counter 3, kernel_0 corresponds to Counter 2, output_1 corresponds to Counter 1, and output_0 corresponds to Counter 0.

In the example of two-dimensional convolution (illustrated in FIG. 2 and in Listing 1), each counter 300 has two accumulators 330 associated with it, as illustrated in FIG. 3A, in which (a) the trigger signal received by each counter 300 is used both (i) to trigger a count (e.g., an increment or a decrement) in the counter and (ii) to cause the accumulator 330 to perform an accumulation, i.e., to add the value of the stride register 305 to the value stored in the accumulator register 310, and (b) the reset signal is used to reset the accumulator registers 310 of both accumulators 330.

Because, e.g., in the calculation of input_address in Listing 2, the stride associated with output_0 is the same as the stride associated with kernel _0 (the stride for both being input_size*sizeof_elem), the value of the stride register connected to accumulator 2_1 may be the same (Stride 4) as the value of the stride register connected to accumulator 0_1. This may be accomplished by writing the same value to both of these stride registers at initiation, or by constructing the address generation unit so that the two accumulators 330 share a stride register 305 (e.g., by connecting a single stride register to the adders 315 of both of the accumulators 330). Similarly, the stride registers 305 labeled Stride 5 may store the same value or they may be implemented as a single register connected to two adders 315. As such, the stride registers 305 illustrated in FIG. 3A need not all be distinct hardware structures. Each stride register 305 may be capable of being modified (e.g., overwritten) or (e.g., in an accelerator constructed to handle only tensors of certain sizes) it may be read-only (e.g., hard-wired at the time of fabrication, or constructed from one-time programmable read-only memory cells).

In some embodiments, the address generation unit is configurable not only by writing values, corresponding to the sizes of the tensors to be processed, to the stride registers 305 and the counter registers 325 but also by specifying the number of counters 300 (and counter registers 325), the number of accumulators, and the number of stride registers 305 to be included in the address generation unit. For example, a circuit (which may be referred to as a resource circuit) may include a large number of resources including counters 300 (and counter registers 325), accumulators, stride registers 305, and adders 315, and the control processor 130 may configure the resource circuit (e.g., by writing suitable values to configuration registers) with connections between the stride registers 305, accumulators, counters 300 and adders 315 so as to construct a suitable address generation unit 135.

For example, the resource circuit may include an array of adders 315 (e.g., 32 adders 315), a multi-port register file, which may contain, e.g., 32 registers, and an array of counters 300. The adder 315 of each accumulator 330 may be associated with (i) a first 5-bit index register for storing the 5-bit index of the accumulator register from which, when performing an accumulation operation, the adder 315 reads the current accumulator value and to which the adder 315 writes the new accumulator value (resulting from the addition of the stride value to the current accumulator value) and (ii) a 5-bit register for storing the 5-bit index of the stride register from which, when performing an accumulation operation, the adder 315 reads the stride value to be added. Similarly, each counter 300 may be implemented using two registers from the register file, one being the counter register and the other being the current count. The counter 300 may then be implemented using (i) an adder 315, hard-wired to have a value of 1 at one of its inputs, to form an incrementing circuit, the other input and the output of the adder 315 being connected using index registers as described above for an accumulator 330, and (ii) a comparator which triggers resetting of the counter 300 and the generating of a pulse in each of the trigger and reset outputs when the counter value is equal to the counter register.

In another embodiment, each accumulator may be part of a multi-port accumulator file, which may be a structure that is analogous to a multi-port register file (of accumulator registers), with each register being hard-wired to a respective adder 315, and with the remaining input of the adder 315 being associated with an index register identifying, in a separate register file, the stride register. Similarly, each counter 300 may be part of a multi-port counter file which may be a structure that is analogous to a multi-port register file (of accumulator registers), with each register being hard-wired to a respective adder 315, and with the remaining input of the adder 315 being associated with an index register identifying the stride register in a separate register file.

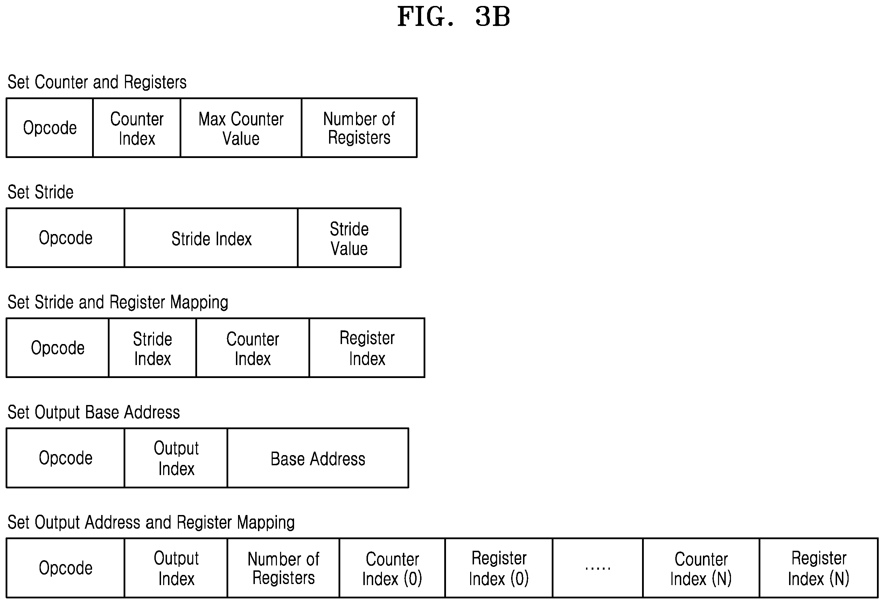

FIG. 3B depicts instructions of an instruction set, according to an embodiment of the present disclosure. FIG. 3B shows an instruction set that may be used to configure a resource circuit to operate as an address generation unit. Each instruction includes an op code, identifying the instruction, and a plurality of arguments. A first instruction, "Set Counter and Registers", may be used to configure the counters 300. Each such instruction includes the index of the counter 300 to be configured, the maximum counter value (which, when the instruction is executed, is stored in the counter register), and the number of accumulators 330 ("Number of Registers") with which the counter is associated. A second instruction, "Set Stride" may be used to configure a stride register, by writing the stride value to the stride register having the index specified in the first argument. A third instruction "Set Stride and Register Mapping" specifies (by index) which counter and which stride register is associated with which accumulator 330 (the accumulator 330 being identified by the argument "Register Index"). A fourth instruction "Set Output Base Address" may be used to store a base address in a register associated with an output identified by an output index. A fifth instruction "Set Output address and Register mapping" may be used to associate, with an output (identified by an output index (the first argument)), one or more accumulators the outputs of which are to be summed to generate address offsets at that output. The number of accumulators to be summed is specified by the second argument ("Number of Registers"), and each pair of arguments after the first two arguments specifies the index of an accumulator to be included in the sum, and the index of the counter with which the accumulator is associated. In such an embodiment, each accumulator 330 may be identified by (i) the index of the counter with which it is associated, and (ii) the index of the accumulator (e.g., 0 or 1).

The system and method described herein is not limited to an address generator for two-dimensional convolution operations, and analogous systems and methods may be used to generate addresses for a variety of tensor operations, including three-dimensional convolution operations or convolution operations with an arbitrary number of dimensions, or tensor multiplications (e.g., matrix multiplications). For example, for a two-dimensional tensor multiplication (e.g., a matrix multiplication) of the form $C = A B$, where A is an $n \times k$ matrix, B is a $k \times m$ matrix, and C is an $n \times m$ matrix, three cascaded counters may be used, (corresponding to three nested loops, counting over the range of values of k, (in the innermost loop), the range of values of n, and the range of values of m, respectively, and three accumulators 330, for calculating the corresponding address offsets in the A, B and C matrices. Such an address generation unit may be constructed in a resource circuit with a counter file and an accumulator file by programming two index registers, associated with two reset (or trigger) outputs of each counter, with the index of (i) an accumulator 330 (in an accumulator file) associated with the counter and (ii) the next counter in the cascade. A stride register may be associated with each accumulator in the manner described above, for the address generation unit for a two-dimensional convolution.

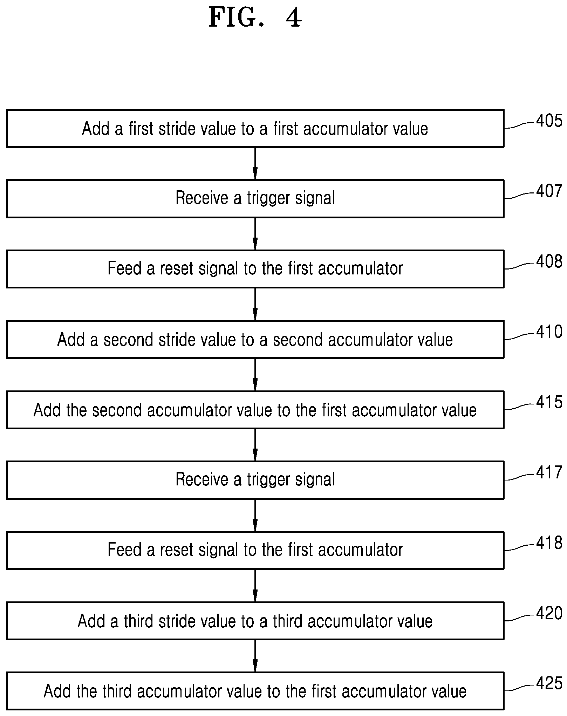

FIG. 4 is a flow chart of a method of generating addresses, according to an embodiment of the present disclosure. Although FIG. 4 illustrates various operations in such a method, embodiments according to the present disclosure are not limited thereto. For example, according to some embodiments, such a method may include additional operations or fewer operations, or the order of operations may vary (unless otherwise explicitly stated or implied) without departing from the spirit and scope of embodiments according to the present disclosure.

The method may include generating a first address, by an address generator. The address generator may include: a first accumulator (e.g., accumulator 3_1 in FIG. 3A) including an accumulator register 310 for storing a first accumulator value; and a first stride register configured to store a first stride value. As discussed above, in the context of FIG. 3A, the generating of the first address may include adding, at 405, the first stride value to the first accumulator value. In some embodiments, the address generator further includes a first counter (e.g., Counter 3 of FIG. 3A) configured: to receive, at 407, a trigger signal, and, upon expiration of a count, to feed, at 408, a reset signal to the first accumulator. As discussed above, in the context of FIG. 3A, in some embodiments, the address generator further includes: a second accumulator (e.g., accumulator 2_1 in FIG. 3A) including an accumulator register 310 for storing a second accumulator value; and a second stride register (labeled Stride 4, in FIG. 3A) configured to store a second stride value. In some embodiments, the generating of the first address further includes: adding, at 410, the second stride value to the second accumulator value, and adding, at 415, the second accumulator value to the first accumulator value.

In some embodiments, the address generator includes an adder 315 configured to add the second accumulator value to the first accumulator value. In some embodiments, the address generator further includes a second counter (e.g., Counter 2 of FIG. 3A) configured: to receive, at 417, a trigger signal from a trigger signal output of the first counter, and, upon expiration of a count, to feed, at 418, a reset signal to the second accumulator.

In some embodiments: the address generator further includes: a third accumulator (e.g., accumulator 1_1 of FIG. 3A) including an accumulator register for storing a third accumulator value; and a third stride register configured to store a third stride value, and the generating of the first address further includes: adding, at 420, the third stride value to the third accumulator value, and adding, at 425, the third accumulator value to the first accumulator value. In some embodiments, the address generator further includes an adder 315 configured to add: the first accumulator value, the second accumulator value, and the third accumulator value.

The address generator may include additional counters and accumulators 330, e.g., a third counter (e.g., Counter 1 of FIG. 3A) and a fourth counter (e.g., Counter 0 of FIG. 3A), and a fourth accumulator 330 (e.g., accumulator 0_1 of FIG. 3A) and a fifth accumulator 330 (e.g., accumulator 3_0 of FIG. 3A).

Thus, as described above, according to various embodiments address generation for tensor computations may be performed efficiently by repeatedly adding (in an accumulator) a stride to a previously calculated contribution to an address offset. This operation is mathematically equivalent to multiplying the stride by an integer corresponding to an iteration of a loop of Listing 1. The system and method presented herein, however, avoids the need to perform multiplications to generate addresses, and instead, for example, may generate an address by adding a stride value to an accumulator value. As such, some embodiments disclosed herein improve the efficiency of a computer and thereby improve the functioning of the computer.

As such, an address generator constructed according to an embodiment of the present disclosure may improve the efficiency (e.g., it may increase the speed, and reduce the power consumption) of address generation, and of the tensor operations (e.g., convolution operations) for which address generation may be used. As such, it may also improve the efficiency of artificial intelligence operations (e.g., inference operations such as classification) for which tensor operations may be used.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

It will be understood that when an element is referred to as being "directly connected" or "directly coupled" to another element, there are no intervening elements present. As used herein, "generally connected" means connected by an electrical path that may contain arbitrary intervening elements, including intervening elements the presence of which qualitatively changes the behavior of the circuit. As used herein, "connected" means (i) "directly connected" or (ii) connected with intervening elements, the intervening elements being ones (e.g., low-value resistors or inductors, or short sections of transmission line) that do not qualitatively affect the behavior of the circuit.

Some embodiments may include features of the following numbered statements.

1. A system, comprising:

   an address generator comprising:

      a first accumulator comprising a first accumulator register for storing a first accumulator value; and
      a first stride register configured to store a first stride value,

   the address generator being configured to generate a first address, the generating of the first address comprising adding the first stride value to the first accumulator value.

2. The system of statement 1, wherein the address generator further comprises a first counter configured:

   to receive a trigger signal, and,
   upon expiration of a count, to feed a reset signal to the first accumulator.

3. The system of statement 1 or statement 2, wherein:
   the address generator further comprises:

      a second accumulator comprising a second accumulator register for storing a second accumulator value; and
      a second stride register configured to store a second stride value, and the generating of the first address further comprises:

         adding the second stride value to the second accumulator value, and
         adding the second accumulator value to the first accumulator value.

4. The system of statement 3, wherein the address generator further comprises an adder configured to add the second accumulator value to the first accumulator value.

5. The system of any one of statements 2 through 4, wherein the address generator comprises a plurality of cascaded counters comprising the first counter and a second counter, the second counter being configured:

   to receive a trigger signal from a reset signal output of the first counter, and,
   upon expiration of a count, to feed a reset signal to the second accumulator.

6. The system of any one of statements 3 through 5, wherein:

   the address generator further comprises:

a third accumulator comprising a third accumulator register for storing a third accumulator value; and a third stride register configured to store a third stride value, and

the generating of the first address further comprises:

adding the third stride value to the third accumulator value, and
adding the third accumulator value to the first accumulator value.

7. The system of statement 6, wherein the address generator further comprises an adder configured to add:

the first accumulator value,
the second accumulator value, and
the third accumulator value.

8. The system of statement 6 or statement 7, wherein the third stride register is the same register as the first stride register.

9. The system of any one of statements 6 through 8, wherein:

the address generator further comprises:

a fourth accumulator comprising a fourth accumulator register for storing a fourth accumulator value; and
a fourth stride register configured to store a fourth stride value, and

the generating of the first address further comprises:

adding the fourth stride value to the fourth accumulator value, and
adding the fourth accumulator value to the first accumulator value.

10. The system of statement 9, wherein the address generator further comprises an adder configured to add:

the first accumulator value,
the second accumulator value,
the third accumulator value, and
the fourth accumulator value.

11. The system of statement 9 or statement 10, wherein the fourth stride register is the same register as the second stride register.

12. The system of any one of the preceding statements, wherein the address generator further comprises:

a fifth accumulator comprising a fifth accumulator register for storing a fifth accumulator value;
a fifth stride register configured to store a fifth stride value; and
a first counter configured:

to receive a trigger signal, and,
upon expiration of a count, to feed a reset signal to the first accumulator and to the fifth accumulator.

13. A method, comprising:

generating a first address, by an address generator,
the address generator comprising:

a first accumulator comprising a first accumulator register for storing a first accumulator value; and
a first stride register configured to store a first stride value,

the generating of the first address comprising adding the first stride value to the first accumulator value.

14. The method of statement 13, wherein the address generator further comprises a first counter configured:

to receive a trigger signal, and,
upon expiration of a count, to feed a reset signal to the first accumulator.

15. The method of statement 13 or statement 14, wherein:
the address generator further comprises:

a second accumulator comprising a second accumulator register for storing a second accumulator value; and
a second stride register configured to store a second stride value, and the generating of the first address further comprises:

adding the second stride value to the second accumulator value, and
adding the second accumulator value to the first accumulator value.

16. The method of statement 15, wherein the address generator further comprises an adder configured to add the second accumulator value to the first accumulator value.

17. The method of any one of statements 14 through 16, wherein the address generator further comprises a second counter configured:

to receive a trigger signal from a reset signal output of the first counter, and,
upon expiration of a count, to feed a reset signal to the second accumulator.

18. The method of any one of statements 15 through 17, wherein:

the address generator further comprises:

a third accumulator comprising a third accumulator register for storing a third accumulator value; and
a third stride register configured to store a third stride value, and

the generating of the first address further comprises:

adding the third stride value to the third accumulator value, and
adding the third accumulator value to the first accumulator value.

19. The method of statement 18, wherein the address generator further comprises an adder configured to add:

the first accumulator value,
the second accumulator value, and
the third accumulator value.

20. A system, comprising:

an accelerator, comprising:

an address generator,
a multiply-and-accumulate circuit, and
a data memory,

the address generator comprising a first accumulator comprising a first accumulator register for storing a first accumulator value, and
the address generator being configured to generate a first address, the generating of the first address comprising adding a first stride value to the first accumulator value.

Although exemplary embodiments of an address generation unit have been specifically described and illustrated herein, many modifications and variations will be apparent to those skilled in the art. Accordingly, it is to be understood that an address generation unit constructed according to principles of this disclosure may be embodied other than as specifically described herein.

**Claims**

1. A system, comprising:

    an address generator comprising:

        a first accumulator (330) comprising a first accumulator register (310) for storing a first accumulator value; and
        a first stride register (305) configured to store a first stride value,

        the address generator being configured to generate a first address, the generating of the first address comprising adding the first stride value to the first accumulator value.

2. The system of claim 1, wherein the address generator further comprises a first counter (300) configured:

    to receive a trigger signal, and,
    upon expiration of a count, to feed a reset signal to the first accumulator (330).

3. The system of claim 1 or 2, wherein:

    the address generator further comprises:

        a second accumulator (330) comprising a second accumulator register (310) for storing a second accumulator value; and
        a second stride register (305) configured to store a second stride value, and

    the generating of the first address further comprises:

        adding the second stride value to the second accumulator value, and adding the second accumulator value to the first accumulator value.

4. The system of claim 3, wherein the address generator further comprises an adder (315) configured to add the second accumulator value to the first accumulator value.

5. The system of claim 4, wherein the address generator comprises a plurality of cascaded counters comprising the first counter (300) and a second counter (300), the second counter (300) being configured:

    to receive a trigger signal from a reset signal output of the first counter (300), and,
    upon expiration of a count, to feed a reset signal to the second accumulator (330).

6. The system of claim 3, wherein:
    the address generator further comprises:

    a third accumulator (330) comprising a third accumulator register (310) for storing a third accumulator value; and
    a third stride register (305) configured to store a third stride value, and the generating of the first address further comprises:

        adding the third stride value to the third accumulator value, and
        adding the third accumulator value to the first accumulator value.

7. The system of claim 6, wherein the address generator further comprises an adder (315) configured to add:

    the first accumulator value,
    the second accumulator value, and
    the third accumulator value.

8. The system of claim 6 or 7, wherein the third stride register (305) is the same register as the first stride register (305).

**9.** The system of claim 6, wherein:
the address generator further comprises:

a fourth accumulator (330) comprising a fourth accumulator register (310) for storing a fourth accumulator value; and
a fourth stride register (305) configured to store a fourth stride value, and the generating of the first address further comprises:

adding the fourth stride value to the fourth accumulator value, and
adding the fourth accumulator value to the first accumulator value.

**10.** The system of claim 9, wherein the address generator further comprises an adder (315) configured to add:

the first accumulator value,
the second accumulator value,
the third accumulator value, and
the fourth accumulator value.

**11.** The system of claim 9 or 10, wherein the fourth stride register (305) is the same register as the second stride register (305).

**12.** The system of any one of claims 1 to 11, wherein the address generator further comprises:

a fifth accumulator (330) comprising a fifth accumulator register (310) for storing a fifth accumulator value;
a fifth stride register (305) configured to store a fifth stride value; and
a first counter (300) configured:

to receive a trigger signal, and,
upon expiration of a count, to feed a reset signal to the first accumulator (330) and to the fifth accumulator (330).

**13.** A method, comprising:

generating a first address, by an address generator,
the address generator comprising:

a first accumulator (330) comprising a first accumulator register (310) for storing a first accumulator value; and
a first stride register (305) configured to store a first stride value,

the generating of the first address comprising adding the first stride value to the first accumulator value.

**14.** The method of claim 13, wherein the address generator further comprises a first counter (300) configured:

to receive a trigger signal, and,
upon expiration of a count, to feed a reset signal to the first accumulator (330).

**15.** The method of claim 13 or 14, wherein:

the address generator further comprises:

a second accumulator (330) comprising a second accumulator register (310) for storing a second accumulator value; and
a second stride register (305) configured to store a second stride value, and

the generating of the first address further comprises:
adding the second stride value to the second accumulator value, and adding the second accumulator value to the first accumulator value.

# FIG. 1A

# FIG. 1B

FIG. 2

| | | | |
|---|---|---|---|
| x0 | x1 | x2 | x3 |
| x4 | x5 | x6 | x7 |
| x8 | x9 | x10 | x11 |
| x12 | x13 | x14 | x15 |

205

| | | |
|---|---|---|
| w0 | w1 | w2 |
| w3 | w4 | w5 |
| w6 | w7 | w8 |

210

| | |
|---|---|
| y0 | y1 |
| y2 | y3 |

215

# FIG. 3A

EP 4 782 988 A1

# FIG. 3B

Set Counter and Registers

| Opcode | Counter Index | Max Counter Value | Number of Registers |
|---|---|---|---|

Set Stride

| Opcode | Stride Index | Stride Value |
|---|---|---|

Set Stride and Register Mapping

| Opcode | Stride Index | Counter Index | Register Index |
|---|---|---|---|

Set Output Base Address

| Opcode | Output Index | Base Address |
|---|---|---|

Set Output Address and Register Mapping

| Opcode | Output Index | Number of Registers | Counter Index (0) | Register Index (0) | ..... | Counter Index (N) | Register Index (N) |
|---|---|---|---|---|---|---|---|

# FIG. 4

Add a first stride value to a first accumulator value ——405

Receive a trigger signal ——407

Feed a reset signal to the first accumulator ——408

Add a second stride value to a second accumulator value ——410

Add the second accumulator value to the first accumulator value ——415

Receive a trigger signal ——417

Feed a reset signal to the first accumulator ——418

Add a third stride value to a third accumulator value ——420

Add the third accumulator value to the first accumulator value ——425

Europäisches
Patentamt

European
Patent Office

Office européen
des brevets

# EUROPEAN SEARCH REPORT

Application Number

EP 25 20 2395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/083729 A1 (MOAT KENT D [US] ET AL) 12 April 2007 (2007-04-12) * paragraph [0064] - paragraph [0074]; figures 7,8,9 * | 1-15 | INV. G06F7/544 G06F9/345 G06F12/02 |
| X | US 2024/403046 A1 (WINTERBOTTOM PHILIP [US]) 5 December 2024 (2024-12-05) * paragraph [0025] - paragraph [0049]; figure 12 * | 1-15 | |
| X | US 5 940 876 A (PICKETT JAMES K [US]) 17 August 1999 (1999-08-17) * column 9, line 15 - column 11, line 47; figure 3 * | 1-15 | |
| A | US 2021/382820 A1 (MINDRU IANCU CIPRIAN [RO]) 9 December 2021 (2021-12-09) * paragraph [0070] - paragraph [0104]; figure 6 * | 1-15 | |

TECHNICAL FIELDS
SEARCHED (IPC)

G06F

The present search report has been drawn up for all claims

| Place of search | Date of completion of the search | Examiner |
|---|---|---|
| Munich | 20 February 2026 | Tenbieg, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 2395

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | | Publication date |
|---|---|---|---|---|---|
| US 2007083729 | A1 | 12-04-2007 | NONE | | |
| US 2024403046 | A1 | 05-12-2024 | EP | 4655730 A1 | 03-12-2025 |
| | | | US | 2024403046 A1 | 05-12-2024 |
| | | | US | 2025370749 A1 | 04-12-2025 |
| | | | WO | 2024159134 A1 | 02-08-2024 |
| US 5940876 | A | 17-08-1999 | US | 5940876 A | 17-08-1999 |
| | | | US | 6088781 A | 11-07-2000 |
| US 2021382820 | A1 | 09-12-2021 | EP | 3896565 A1 | 20-10-2021 |
| | | | US | 2021382820 A1 | 09-12-2021 |

EPO FORM P0459

For more details about this annex : see Official Journal of the European Patent Office, No. 12/82